# EUROPÄISCHE PATENTSCHRIFT

(11) **EP 0 535 334 B1**
(45) Veröffentlichungstag und Bekanntmachung des Hinweises auf die Patenterteilung: **05.07.1995**
(21) Anmeldenummer: 92113496.1
(22) Anmeldetag: 07.08.1992
(51) Int. Cl.: H02K 3/51, H02K 19/38

(54) **Rotor einer elektrischen Maschine mit einer Erregerstromzuleitung**
Rotor of an electric machine with an excitation-current supply
Rotor d'une machine électrique avec une amenée de courant d'excitation

(30) Priorität: 01.10.1991 CH 2903/91
(43) Veröffentlichungstag der Anmeldung: 07.04.1993
(73) Patentinhaber: ASEA BROWN BOVERI AG, 5400 Baden (CH)
(72) Erfinder: Haditsch, Werner, CH-5415 Nussbaumen (CH); Paul, Rudolf, A-2512 Tribuswinkel (AT); Schöllhorn, Karl, Dr., CH-5242 Birr (CH)

(56) Entgegenhaltungen:
- CH-A- 187 785
- DE-A- 2 618 931
- FR-A- 2 644 304
- GB-A- 190 521
- GB-A- 775 109
- US-A- 3 457 440
- SOVIET INVENTIONS ILLUSTRATED Section EI, Week 8219, 22. Juni 1983 Derwent Publications Ltd., London, GB; Class X, AN G3336 K & SU-A-936252

## Beschreibung

### TECHNISCHES GEBIET

Die Erfindung bezieht sich auf einen Rotor einer elektrischen Maschine, insbesondere Turbogenerator, mit einer Erregerstromzuleitung zur Verbindung der zentral im Rotor axial verlaufenden Erregerleitung mit den Erregerwicklungsleitern im Wickelkopf des Rotors, welcher Rotor eine Rotorkappe zur Abstützung des Wickelkopfs der Erregerwicklung aufweist, mit einem Erregerzuleitungsbolzen aus Stahl, der in einer radialen Wellenbohrung angeordnet und an seinem inneren Ende mit der genannten Erregerleitung und an seinem äusseren Ende ausserhalb der Rotorwelle über Verbindungsleiter mit den Leitern des Rotorwickelkopfes elektrisch und mechanisch verbunden ist, mit Mitteln zur Abstützung der besagten Verbindungsleiter.

Die Erfindung nimmt dabei Bezug auf einen Stand der Technik, wie er sich beispielsweise aus der US-PS 3,733,502 ergibt.

### TECHNOLOGISCHER HINTERGRUND UND STAND DER TECHNIK

Bei Turbogeneratoren erfolgt die Führung der Erregerleitungen am Rotor zur Rotorwicklung im allgemeinen in einer zentralen Wellenbohrung. Die Leiter in der Wellenbohrung sind meist massiv und rundum isoliert. In diese Massivleiter sind Stromzuführungsbolzen eingeschraubt. Vom radial aussenliegenden Ende der Bolzen führt dann eine Leitung zunächst axial, dann radial an den Erregerwicklungsanschluss im Rotorwickelkopf. Diese Leitung wird im Betrieb infolge der Wellendurchbiegung durch das Eigengewicht des Rotors und Unwuchtkräfte extrem hoch beansprucht.
So wird bei elektrischen Maschine nach der US-PS 3,733,502 der axiale Abschnitt dieser Leitung in einer Nut verlegt, welche mittels Nutkeilen mit Trapezquerschnitt verschlossen ist (vgl. dort Fig.7). Um die Einwirkungen auf den radial verlaufenden Abschnitt der Zuleitungen zu vermindern, verlaufen diese praktisch zur Gänze im Rotorballen.

In der DE-OS 2,362,886 verlaufen die axialen Leiterabschnitte in Nuten ähnlich der US-PS 3,733,502. Die Uebergangsstelle vom axialen zum radialen Abschnitt ist dort jedoch durch separate Abstützelemente mit abgerundeten Kanten ausgebildet.

Neben Fliehkräften wirken auf die axial verlaufenden Leitungsabschnitte und die zugehörigen Befestigungskeile insbesondere auch Relativbewegungen zwischen dem Bolzenende und dem Erregerwicklungsanschluss im Rotorwickelkopf ein. Im ungünstigsten Fall könnnen sich dadurch im Bereich der Keilauflageflächen in den Nuten Ermüdungsrisse ausbilden, welche bis zur Havarie führen können.

Nachteilig bei allen bekannten Auführungen ist, dass das Ersetzen der Stromzuführungsleiter sehr aufwendig ist.

### KURZE DARSTELLUNG DER ERFINDUNG

Der Erfindung liegt die Aufgabe zugrunde, die Erregerstromzuleitung zwischen den Massivleitern in der zentralen Wellenbohrung und dem eigentlichen Wicklungsanschluss am Rotorwickelkopf derart auszubilden, dass weder die Welle noch die elektrische Verbindung mechanisch gefährdet sind und im Bedarfsfall eine Reparatur einfach auszuführen ist.

Diese Aufgabe wird erfindungsgemäss dadurch gelöst, dass die besagten Verbindungsleiter an der Rotorkappe, vorzugsweise an ihrer Kappenplatte, elektrisch isoliert abgestützt sind, und dass der Erregerzuleitungsbolzen quer zur Bolzenlängsrichtung elastisch ist.

Die sich im Betrieb einstellende Wellendurchbiegung infolge Rotoreigengewicht und Fliehkraftbelastung führt an sich zu Relativbewegungen hauptsächlich in Maschinenlängsrichtung zwischen den zwei "Fixpunkten" Einschraubstelle des Erregerzuleitungsbolzen in die Massivleiter und Rotorwicklungsanschluss. Durch die Abstützung des Kontaktteils an der Kappenplatte verlagert sich quasi der zweitgenannte Fixpunkt an die Abstütztstelle an der Kappenplatte. Durch die Flexibilität des Erregerzuleitungsbolzens quer zu seiner Längsrichtung kann dieser nun diesen Relativbewegungen folgen. Dies führt zu einer wesentlichen Entlastung der Erregerzuleitung.

Die Verbindungsleiter zwischen Erregerzuleitungsbolzen und Erregerwicklungsanschluss im Wickelkopf sind vorzugsweise zweiteilig ausgebildet und lösbar miteinander verbunden. Durch diese Unterteilung wird - sofern ein Defekt überhaupt noch auftritt - der Aus- und Einbau des einzig verbliebenen reparaturanfälligen Teils, nämlich das bolzenseitige Kontaktteil, ohne grossen Aufwand möglich. Es sind lediglich die Schrauben sowie die Verschraubung am äusseren Ende des Erregerzuleitungsbolzens zu lösen, die allesamt gut zugänglich sind.

Der in Weiterbildung des Erfindungsgegenstandes verwendete geschlitzte Bolzen weist den Vorteil auf, dass er ohne nennenswerte Einbusse an Festigkeit in Längsrichtung quer zur Bolzenlängsrichtung elastisch ist. Die Schlitzung in Längsrichtung ermöglicht zudem eine optimale Kühlung. Der erfindungsgemässe Bolzen ist auch gegenüber bekannten Ausführungen leichter, so dass sich eine zusätzliche Halterung durch eine Verschraubung etc. erübrigt. Die Kühlung der Bolzens kann noch gesteigert werden, wenn der Bolzen mit einer den gesamten Bolzen durchsetzenden Durchgangsbohrung versehen ist. Vorteilhaft ist es ferner, den Schaft konisch auszubilden, wobei das dickere Ende am innenliegenden Bolzende ist. Dies vermindert die Fliehkraftbelastung.

Eine weitere Steigerung der Kühlung kann erreicht werden, wenn über den Bolzen ein dünnwandiger Hohlzylinder geschoben ist, der sich durch einen nach innen ragenden Vorsprung an einem Bund am Bolzen in der Höhe des Uebergangs vom Gewinde zum Schaft abstützt und gezielt Kühlgas durch den Raum zwischen Bolzenschaft und diesem Zylinder geleitet wird. In Verbindung mit den bis unter den besagten Bund reichenden Schlitzen lässt sich die Kühlung so vervollkommnen, dass der Bolzen allen Betriebsbeanspruchungen in elektrischer und mechanischer Hinsicht standhält.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Längsschnitt durch die Endpartie des Rorors eines Turbogenerators;
- Fig.2: einen Schnitt durch die Kappenplatte des Rotors gemäss Fig.1 längs deren Linie AA;
- Fig.3: einen Längsschnitt durch den Erregerzuleitungsbolzen des Turbogenerators gemäss Fig.1 längs deren Linie BB;
- Fig.4: einen Querschnitt durch den Erregerzuleitungsbolzen gemäss Fig.3 längs deren Linie CC.

### WEGE ZUR AUSFÜHRUNG DER ERFINDUNG

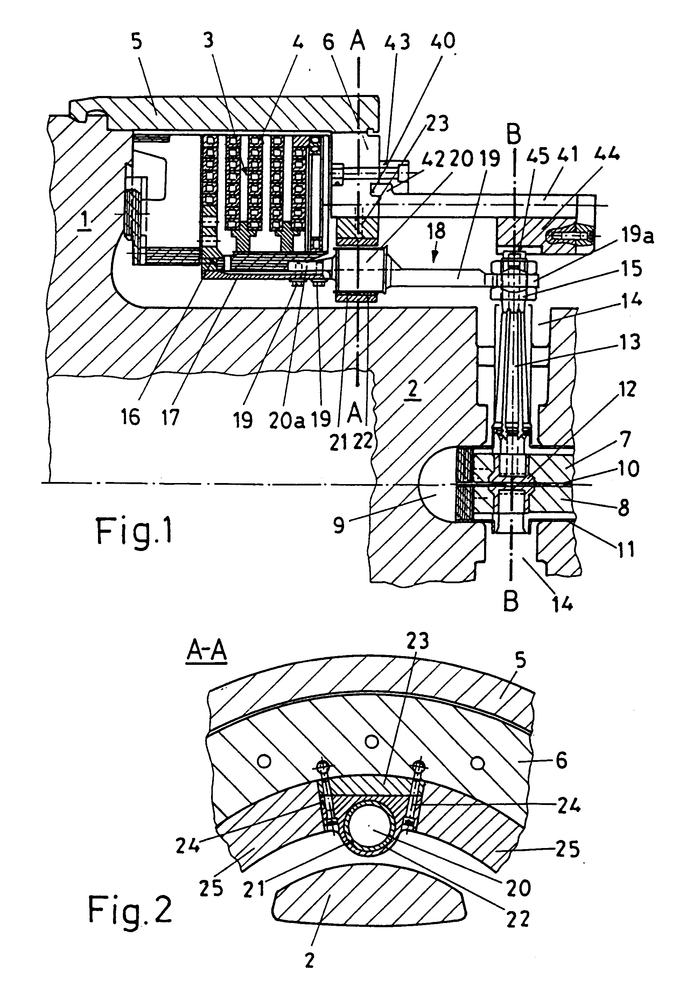

Im Längsschnitt durch die Endpartie des Rotors eines Turbogenerators nach Fig.1 ist mit 1 der Rotorballen, mit 2 die Rotorwelle bezeichnet. Im Rotorwickelkopf 3 sind in bekannter Weise die im Beispielsfall als Hohlleiter ausgebildeten Rotorwicklungsleiter 4 miteinander verschaltet. Eine Rotorkappe, bestehend aus Kappenring 5 und Kappenplatte 6 dient zur Abstützung des Rotorwickelkopfs 3.

Die Zuführung des Erregerstroms zur Erregerwicklung erfolgt über Massivleiter 7,8, die in einer zentralen Wellenbohrung 9 in der Rotorwelle 2 vorgesehen ist. Die Massivleiter 7,8 sind gegeneinander durch eine Isolierzwischenlage 10 elektrisch isoliert. Ein in die Wellenbohrung 9 eingesetztes Isolierrohr 11 dient zur Isolation der Massivleiter 7,8 gegenüber der Rotorwelle 2.

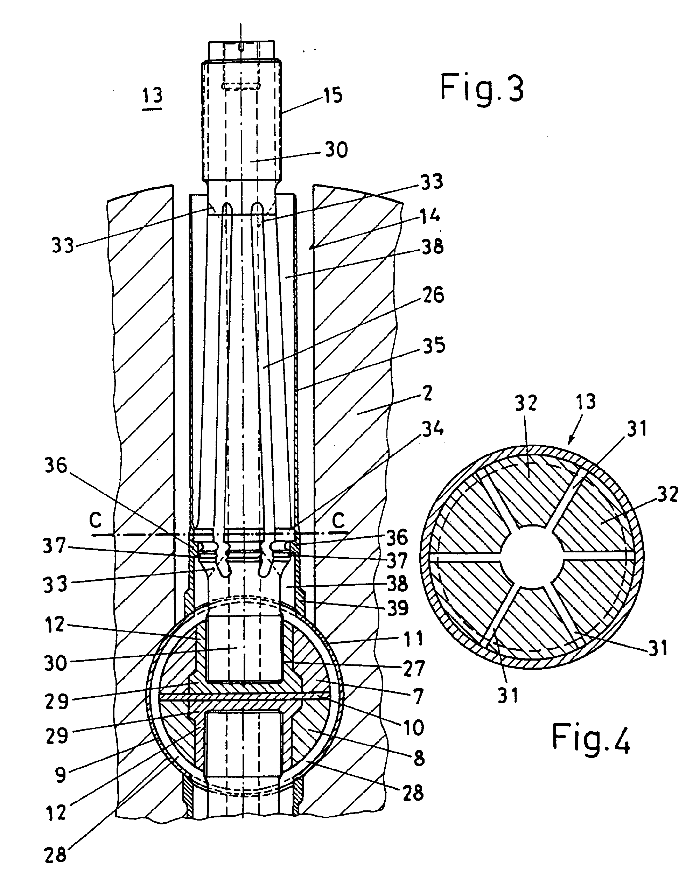

Am wickelkopfseitigen Ende sind beide Massivleiter 7,8 mit einer radialen Bohrung versehen, in die je ein Gewindeeinsatz 12 eingebracht ist. In diesen Gewindeeinsatz 12 ist je ein Erregerzuleitungsbolzen 13 eingeschraubt. Dieser Bolzen ist quer zur Bolzenlängsrichtung allseits flexibel. Sein detaillierter Aufbau wird später anhand der Figuren 3 und 4 näher erläutert. Diese Bolzen liegen in einer radialen Wellenbohrung 14 der Rotorwelle 2. Das aus dieser Bohrung 14 herausragende Ende des Bolzens ist mit einem Gewinde 15 versehen.

Die elektrische Verbindung zwischen dem Erregerzuleitungsbolzen 13 und dem Rotorwicklungsanschluss 16 im Rotorwickelkopf 3 erfolgt über einen zweiteiligen, axial verlaufenden Verbindungsleiter. Dieser Besteht wickelkopfseitig aus einer Lasche 17, die mit dem Rotorwicklungsanschluss 16 beispielsweise verlötet ist, und bolzenseitig aus einem Kontaktteil 18, das an seinem bolzenseitigen Ende mit dem Stromzuführungsbolzen verschraubt ist. Dieses Kontaktteil 18 ist erfindungsgemäss an der Kappenplatte 6 elektrisch isoliert und (mechanisch) lösbar abgestützt. Lasche 17 und Kontaktteil 18 sind zwischen dem Rotorwicklungsanschluss 16 und Abstützstelle miteinander lösbar, im Beispielsfall durch Schrauben 19, verbunden.

Wie aus Fig.1 in Verbindung mit Fig.2 deutlich hervorgeht, ist das Kontaktteil 18 am bolzenseitigen Ende 19 abgeflacht und mit einer Oese 19a versehen. Er geht dann in einen zylindrischen Teil 20 über, der am Ende mit einer Anschlussoese 20a ausgestattet ist. Der zylindrische Teil 20 ist von einer Isolierhülse 21 umgeben. Vorteilhaft ist es, wenn diese Isolierhülse 21 durch einen dünnen aufgeschrumpften Stahlring (nicht eingezeichnet) gesichert und geschützt ist. Der zylindrische Teil 20 ist mit einem Haltebügel 22 unter Zwischenlage eines Anpassstücks 23 am Innenumfang der Kappenplatte 6 mittels Schrauben 24 befestigt. Ein Hilfsring 25 dient der Schaffung eines gleichmässigen Ringspalts als Gaseintritt in den Rotorwickelkopf.

Die sich im Betrieb einstellende Wellendurchbiegung infolge Rotoreigengewicht und Fliehkraftbelastung führt an sich zu Relativbewegungen hauptsächlich in Maschinenlängsrichtung zwischen den zwei "Fixpunkten" Einschraubstelle des Erregerzuleitungsbolzen in die Massivleiter 7,8 und Rotorwicklungsanschluss 16. Durch die Abstützung des Kontaktteils 18 an der Kappenplatte 6 verlagert sich quasi der zweitgenannte Fixpunkt an die Abstütztstelle an der Kappenplatte 6. Durch die Flexibilität des Erregerzuleitungsbolzens 13 quer zu seiner Längsrichtung kann dieser nun diesen Relativbewegungen folgen. Dies führt zu einer wesentlichen Entlastung der Erregerzuleitung.

Durch die beschriebene Unterteilung der Verbindsleiter zwischen Bolzen 13 und Rotorwicklungsanschluss 16 (Lasche 17 und Kontaktteil 18) wird - sofern ein Defekt überhaupt noch auftritt - der Aus- und Einbau des einzig verbliebenen reparaturanfälligen Teils, nämlich das bolzenseitige Kontaktteil 19, ohne grossen Aufwand möglich. Es sind lediglich die Schrauben 19 und 24 sowie die Verschraubung am äusseren Ende des Erregerzuleitungsbolzens zu lösen, die allesamt gut zugänglich sind.

Eine bevorzugte Ausführungsform eines Erregerzuleitungsbolzens 13 ist in den Figuren 3 und 4 dargestellt.

Der Bolzen 13 besteht aus Stahl weist einen konischen Schaft 26 und Gewinde 27, 15 an beiden Enden auf. Am inneren Ende ist der Bolzen 13 in Massivleiter 7,8 mit Halbkreisquerschnitt eingeschraubt, die axial in einer zentralen Wellenbohrung 9 der Rotorwelle 2 verlaufen. Zur gegenseitigen Isolierung ist zwischen den beiden Flachseiten der Massivleiter 7,8 eine Isolierzwischenlage 10 aus glasfaserverstärktem Kunststoff vorgesehen. Die zentrale Wellenbohrung 9 ist mit einem Isolierrohr 11 ausgekleidet, das im Bereich der Bolzen 13 Durchbrüche aufweist. Zwischen dem Isolierrohr 11 und den Massivleitern 7,8 ist ein Ringraum 28 vorgesehen, durch den Kühlgas strömen kann. Weil die Massivleiter 7,8 in der Regel aus Kupfer oder einer Kupferlegierung bestehen, ist der Bolzen 13 nicht direkt, sondern unter Verwendung eines Gewindeeinsatzes 12, der an seinem der Flachseite der Massivleiter 7,8 zugewandtem Ende einen Bund 29 aufweist, in die Massivleiter 7,8 eingeschraubt.

Wie aus dem in Fig.4 dargestellten Bolzenquerschnitt erkennbar ist, ist der Bolzenschaft 26 mit einer Durchgangsbohrung 30 in Bolzenlängsrichtung versehen. Zudem ist der Bolzenschaft 26 in Bolzenlängsrichtung mit im Beispielsfall sechs Schlitzen 31 versehen, die in Fig.4 als Sektoren 32 erkennbar sind. Unter einem Schlitz wird in diesem Zusammenhang eine sich im wesentlichen in Bolzenlängsrichtung erstreckende Materialausnehmung verstanden, die sich im Grenzfall bis zur Bolzenlängsachse erstreckt. Dies Schlitze 31 reichen in Bolzenlängsrichtung bis nahe an die Gewinde 15,27 heran und laufen dort aus (punktierte Linien in 33 in Fig.3). Die radiale Erstreckung der Schlitze 31 ist so zu bemessen, dass diese die Durchgangsbohrung 30 anscheiden. Es kann auch eine von sechs abweichende Anzahl Schlitzen 31 eingebracht sein, wobei drei als untere Grenze zu sehen ist, während die obere Grenze durch die verbleibende Restfestigkeit bestimmt ist.

Am Uebergang vom Schaft 26 zum (inneren) Gewinde 27 ist am Bolzenschaft ein Bund 34 ausgebildet. Vor dem Einschrauben des Bolzens 13 ist (vom innenliegenden Ende her) ein dünnwandiger Hohlzylinder 35 über den Bolzen 13 geschoben. Dieser weist nahe seinem inneren Ende einen nach innen gerichteten ringförmigen Vorsprung 36 auf, mit dem sich der Hohlzylinder 35 an dem genannten Bund 36 abstützt. Ein Sicherungsring 37 dient dem Zusammenhalt von Bolzen 13 und Hohlzylinder 36. Wie aus Fig.3 deutlich hervorgeht, reichen die Schlitze 31 bis hinter den Bund 34, ehe sie im Bolzenabschnitt zwischen dem Bund 34 und dem inneren Gewinde 27 auslaufen. Auf diese Weise steht der Ringraum 28 zwischen Massivleitern 7,8 und dem Isolierrohr 11 über den Durchbruch im Isolierrohr 11 mit dem Ringraum 38 zwischen dem radial aussenliegenden Schaftabschnitt und dem Hohlzylinder 35 in freier Verbindung. Vom Maschinenlüfter gefördertes Kühlgas kann ohne nennenswerte Beeinträchtigung vom Ringraum 28 in der Wellenbohrung 9 durch die Schlitze 31 im Bolzenschaft 26 und schliesslich den Ringraum 38 strömen, ehe es den Rotor wieder verlässt.

Damit möglichst wenig Kühlgas ausserhalb des Hohlzylinders 35 zwischen diesem und der Wandung der radialen Wellenbohrung 14 strömt, ist das untere Ende des Hohlzylinders 39 verdickt und der Form des Isolierrohres 11 angepasst. Zudem ist die Lage des ringförmigen Vorsprunges 36 so bemessen, dass das untere Ende 39 des Hohlzylinder 35 im eingebauten Zustand auf dem Isolierrohr 11 aufliegt.

Neben der gezielten Führung des Kühlgases im und am Bolzen haben die Schlitze 31 eine zweite wesentliche Funktion: Ohne bedeutsame Verkleinerung der Festigkeit des Bolzens in seiner Längsrichtung ist der erfindungsgemässe Stromzuführungsbolzen wesentlich elastischer in Querrichtung. Damit wird eine Entkopplung zwischen der Einspannstelle des Bolzens an den Massivleiter 7,8 in der Wellenbohrung 9 einerseits und dem Anschluss am Rotorwickelkopf 3 erzielt, welche die Betriebssicherheit der Maschine wesentlich steigert.

In Fig.1 ist schlussendlich eine einfach zu realisierende Möglichkeit für den Fall veranschaulicht, dass der Erregerzuleitungsbolzen oder Teile davon oder Teile des Kontaktteils 19 unter Fliehkrafteinwirkung weggeschleudert werden sollten. Ein solches Ereignis kann vom allgemeinen Maschinenschutz nicht unmittelbar erkannt werden, äussert sich jedoch (mechanisch) im Ansteigen der Unwucht.

In der Stirnseite der Kappenplatte 6 ist eine Ringnut 40 vorgesehen, in welche ein Abdeckzylinder 41 aus Metall (Stahl) eingreift. Der Abdeckzylinder 41 ist aussen mit einem Wulst 42 und mittels Klauen 43 an der Kappenplatte 6 befestigt. Der Abdeckzylinder 41 reicht axial über den Erregerzuleitungsbolzen 13 hinaus. Am freien Ende der Abdeckzylinders 41 ist an seiner Innenseite und dem Erregerzuleitungsbolzen 13 gegenüberliegend ein Klotz 44 aus weichem Metall befestigt. Der Abstand ist so bemessen, dass unter normalen Betriebszuständen ein Spalt 45 von wenigen Millimetern zwischen dem Metallklotz und dem Erregerzuleitungsbolzen 13 vorhanden ist.

Im Störfall, z.B. bei Bruch des Erregerzuleitungsbolzens 13 wird dieser durch den Metallklotz 44 gebremst. Weil der Metallklotz 44 samt Abdeckzylinder 41 und Rotorkappe auf Erdpotential liegen, der Erregerzuleitungsbolzen 13 hingegen auf Erregerspannungspotential, spricht sofort der Erdschluss-Schutz des Generators an und führt zum sofortigen Herunterfahren der Maschine. Dabei treten infolge der Einschränkung der radialen Bewegungsmöglichkeit des Erregerzuleitungsbolzens auch keine übermässigen Unwuchten auf.

### BEZEICHNUNGSLISTE

[Kein Teil der Anmeldung - nur zur Information]
- 1: Rotorballen
- 2: Rotorwelle
- 3: Rotorwickelkopf
- 4: Rotorwicklungsleiter
- 5: Kappenring
- 6: Kappenplatte
- 7,8: Massivleiter
- 9: zentrale Wellenbohrung
- 10: Isolierzwischenlage
- 11: Isolierrohr
- 12: Gewindeeinsatz
- 13: Stromzuführungsbolzen
- 14: radiale Wellenbohrung
- 15: äusseres Gewinde an 13
- 16: Rotorwicklungsanschluss
- 17: Lasche
- 18: Kontaktteil
- 19: abgeflachter Abschnitt von 18
- 19a: Oese in 19
- 20: zylindrischer Teil von 18
- 20a: Anschluss-Oese von 20
- 21: Isolierhülse
- 22: Haltebügel
- 23: Anpass-Stück
- 24: Schrauben
- 25: Hilfsring
- 26: konischer Schaft von 13
- 27: inneres Gewinde von 13
- 28: Ringraum zwischen 7,8 und 11
- 29: Bund an 12
- 30: Durchgangsbohrung in 13
- 31: Längsschlitze in 26
- 32: Sektoren
- 33: Auslauf von 31
- 34: Bund an 13
- 35: Hohlzylinder
- 36: nach innen gerichteter Vorsprung in 35
- 37: Sicherungsring
- 38: Ringraum zwischen 13 und 35
- 39: verdicktes Ende von 35
- 40: Nut in der Stirnwand von 6
- 41: Abdeckzylinder
- 42: Wulst an 41
- 43: Klauen
- 44: Metallklotz
- 45: Spalt zwischen 13 und 44

## Patentansprüche

1. Rotor einer elektrischen Maschine, insbesondere Turbogenerator, mit einer Erregerstromzuleitung zur Verbindung der zentral im Rotor axial verlaufenden Erregerleitung (7,8) mit den Erregerwicklungsleitern (4) im Wickelkopf (3) des Rotors, welcher Rotor eine Rotorkappe (5,6) zur Abstützung des Wickelkopfs (3) der Erregerwicklung (4) aufweist, mit einem Erregerzuleitungsbolzen (13) aus Stahl, der in einer radialen Wellenbohrung (14) angeordnet und an seinem inneren Ende mit der genannten Erregerleitung (7,8) und an seinem äusseren Ende ausserhalb der Rotorwelle (2) über Verbindungsleiter (17,18) mit den Leitern (4) des Rotorwickelkopfes elektrisch und mechanisch verbunden ist, mit Mitteln zur Abstützung der besagten Verbindungsleiter (17,18), dadurch gekennzeichnet, dass die besagten Verbindungsleiter (17,18) an der Rotorkappe, vorzugsweise an ihrer Kappenplatte (6), elektrisch isoliert abgestützt sind, und dass der Erregerzuleitungsbolzen (13) quer zur Bolzenlängsrichtung elastisch ist.

2. Rotor nach Anspruch 1, dadurch gekennzeichnet, dass das der Verbindungsleiter zweiteilig ausgebildet ist und wicklungsanschlussseitig aus einer Lasche (7), bolzenseitig aus einem Kontaktteil besteht, beide Teile (17,18) lösbar miteinander verbunden sind, und die Verbindungsstelle der beiden Teile zwischen der Abstützstelle an der Rotorkappe (6) und dem Rotorwicklungsanschluss (16) am Rotorwickelkopf (3) liegt.

3. Rotor nach Anspruch 2, dadurch gekennzeichnet, dass der dem Erregerzuleitungsbolzen (13) zugewandte Teil (19) des Kontaktteils (18) abgeflacht und an seinem Ende mit einer Oese (19a) zur Befestigung am Erregerzuleitungsbolzen (13) versehen ist, und dass das andere Ende (20) zylindrisch ausgebildet ist und eine Anschlussoese (20a) aufweist.

4. Rotor nach Anspruch 3, dadurch gekennzeichnet, dass das Kontaktteil (18) am zylindrischen Ende (20) mittels eines Haltbügels (22) isoliert an der Kappenplatte (6) lösbar befestigt ist.

5. Rotor nach Anspruch 4, dadurch gekennzeichnet, dass zur elektrischen Isolierung des zylindrischen Endes (20) gegenüber der Kappenplatte (6) ersteres von einer Isolierhülse (21) umgeben ist.

6. Rotor nach einem der Ansprüche 1 bis 5, dadurch gekennzeichnet, dass der Schaft (2) des Erregerzuleitungsbolzens in Bolzenlängsrichtung geschlitzt ist, wobei mindestens drei Schlitze (13) vorgesehen sind, die sich radial bis zur Bolzenachse erstrecken.

7. Rotor nach Anspruch 6, dadurch gekennzeichnet, dass der Bolzen (1) mit einer den gesamten Bolzen durchsetzenden Durchgangsbohrung (12) versehen ist.

8. Rotor nach Anspruch 6 oder 7, dadurch gekennzeichnet, dass der Schaft (2) konisch ausgebildet ist, wobei das dickere Ende am innenliegenden Bolzende liegt.

9. Rotor nach einem der Ansprüche 6 bis 8, dadurch gekennzeichnet, dass über den Bolzen (1) ein dünnwandiger Hohlzylinder (17) geschoben ist, der sich durch einen nach innen ragenden Vorsprung (18) an einem Bund (16) am Bolzen in der Höhe des Uebergangs vom Gewinde (3) zum Schaft (2) abstützt.

10. Rotor nach Anspruch 9, dadurch gekennzeichnet, dass die Schlitze (13) im Bolzen den besagten Bund (16) durchsetzen.

11. Rotor nach einem der Ansprüche 1 bis 10, dadurch gekennzeichnet, dass an der Rotorkappe ein Abdeckzylinder (41) angeordnet ist, der axial sich bis über den Erregerzuleitungsbolzen (13) erstreckt, dass am freien Ende des Abdeckzylinders (41) ein als Kontaktorgan dienender Metallklotz (44) vorgesehen ist mit einer Kontaktfläche, die vom radial äusseren Ende des Erregerzuleitungsbolzens (13) durch einen Spalt (45) beabstandet ist.

## Claims

1. Rotor of an electric machine, in particular a turbo-generator, having an exciting current supply lead for connecting the exciter lead (7, 8), which extends axially in the centre of the rotor, to the exciter winding conductors (4) in the winding overhang (3) of the rotor, which rotor has a rotor cap (5, 6) for supporting the winding overhang (3) of the exciter winding (4), having an exciter terminal stud (13) made from steel, which is arranged in a radial shaft bore-hole (14) and is connected at its inner end to the said exciter lead (7, 8) and is connected electrically and mechanically at its outer end outside the rotor shaft (2) via connecting conductors (17, 18) to the conductors (4) of the rotor winding overhang, and having means for supporting the said connecting conductors (17, 18), characterized in that the said connecting conductors (17, 18) are supported on the rotor cap, preferably on its cap plate (6), in an electrically insulated fashion, and in that the exciter terminal stud (13) is elastic transverse to the longitudinal direction of the stud.

2. Rotor according to Claim 1, characterized in that the the [sic] of connecting conductors [sic] is constructed in two parts and consists on the winding-terminal side of a lug (7), and on the stud side of a contact part, the two parts (17, 18) being connected detachably to one another, and the connecting point of the two parts being located between the support point on the rotor cap (6) and the rotor winding termination (16) on the rotor winding overhang (3).

3. Rotor according to Claim 2, characterized in that the part (19), facing the exciter terminal stud (13), of the contact part (18) is flattened and provided at its end with an eye (19a) for fixing to the exciter terminal stud (13), and the other end (20) is constructed cylindrically and has a connecting eye (20a).

4. Rotor according to Claim 3, characterized in that at the cylindrical end (20) the contact part (18) is fixed detachably to the cap plate (6) in an insulated fashion by means of a retaining bow (22).

5. Rotor according to Claim 4, characterized in that for the purpose of electrically insulating the cylindrical end (20) with respect to the cap plate (6) the former is surrounded by an insulating sleeve (21).

6. Rotor according to one of Claims 1 to 5, characterized in that the shank (2) of the exciter terminal stud is slotted in the longitudinal direction of the stud, at least three slots (13) being provided which extend radially up to the stud axis.

7. Rotor according to Claim 6, characterized in that the stud (1) is provided with a through bore-hole (12) penetrating the entire stud.

8. Rotor according to Claim 6 or 7, characterized in that the shank (2) is constructed conically, the thicker end being at the internal stud end.

9. Rotor according to one of Claims 6 to 8, characterized in that there is pushed over the stud (1) a thin-walled hollow cylinder (17) which is supported by an inwardly projecting projection (18) on a collar (16) on the stud at the level of the transition from the thread (3) to the shank (2).

10. Rotor according to Claim 9, characterized in that the slots (13) in the stud penetrate said collar (16).

11. Rotor according to one of Claims 1 to 10, characterized in that there is arranged on the rotor cap a cover cylinder (41) which extends axially up to over the exciter terminal stud (13), and there is provided at the free end of the cover cylinder (14) a metal block (44) which serves as contact element and has a contact surface which is distanced from the radially outer end of the exciter terminal stud (13) by a gap (45).

## Revendications

1. Rotor d'une machine électrique, en particulier d'un turbogénérateur, avec une amenée de courant d'excitation pour relier la ligne d'excitation (7, 8) orientée axialement en position centrale dans le rotor, aux conducteurs (4) de l'enroulement d'excitation dans la tête de bobine (3) du rotor, rotor qui présente une coiffe de rotor (5, 6) pour supporter la tête de bobine (3) de l'enroulement d'excitation (4), avec un boulon d'amenée d'excitation (13) en acier, qui est disposé dans un alésage radial (14) de l'arbre et est raccordé électriquement et mécaniquement, par son extrémité interne à ladite ligne d'excitation (7, 8) et par son extrémité externe à l'extérieur de l'arbre (2) du rotor, par l'intermédiaire de conducteurs de raccordement (17, 18), aux conducteurs (4) de la tête de bobine du rotor, avec des moyens pour supporter lesdits conducteurs de raccordement (17, 18), caractérisé en ce que lesdits conducteurs de raccordement (17, 18) sont supportés de manière électriquement isolante à la coiffe du rotor, de préférence à sa plaque de coiffe (6), et en ce que le boulon d'amenée d'excitation (13) est élastique dans la direction transversale à la direction longitudinale du boulon.

2. Rotor suivant la revendication 1, caractérisé en ce que le conducteur de raccordement est réalisé en deux parties et se compose, du côté du raccord de l'enroulement, d'une barrette (17), et du côté du boulon, d'une pièce de contact, en ce que les deux parties (17, 18) sont assemblées l'une à l'autre de façon détachable, et en ce que l'endroit d'assemblage des deux parties est situé entre l'endroit de support à la coiffe de rotor (6) et le raccord (16) de l'enroulement du rotor à la tête de bobine (3) du rotor.

3. Rotor suivant la revendication 2, caractérisé en ce que la partie (19) de la pièce de contact (18) tournée vers le boulon d'amenée d'excitation (13) est aplatie et est pourvue à son extrémité d'un oeillet (19a) pour la fixation au boulon d'amenée d'excitation (13), et en ce que l'autre extrémité (20) est de forme cylindrique et présente un oeillet de raccordement (20a).

4. Rotor suivant la revendication 3, caractérisé en ce que la pièce de contact (18) est fixée de manière isolée et détachable à la plaque de coiffe (6), par son extrémité cylindrique (20), au moyen d'un étrier de maintien (22).

5. Rotor suivant la revendication 4, caractérisé en ce que, pour assurer son isolation électrique par rapport à la plaque de coiffe (6), l'extrémité cylindrique (20) est entourée d'un manchon isolant (21).

6. Rotor suivant l'une des revendications 1 à 5, caractérisé en ce que la tige (26) du boulon d'amenée d'excitation est fendue dans la direction longitudinale du boulon, au moins trois fentes (31) étant prévues, qui s'étendent radialement jusqu'à l'axe du boulon.

7. Rotor suivant la revendication 6, caractérisé en ce que le boulon (13) est pourvu d'un alésage de passage (30) traversant le boulon tout entier.

8. Rotor suivant la revendication 6 ou 7, caractérisé en ce que la tige (26) est de forme conique, l'extrémité la plus épaisse étant l'extrémité interne du boulon.

9. Rotor suivant l'une des revendications 6 à 8, caractérisé en ce que sur le boulon (13) est enfilé un cylindre creux à paroi mince (35), qui prend appui par une saillie (36) dirigée vers l'intérieur sur un rebord (34) formé sur le boulon à hauteur de la transition entre le filet (27) et la tige (26).

10. Rotor suivant la revendication 9, caractérisé en ce que les fentes (31) dans le boulon traversent ledit rebord (34).

11. Rotor suivant l'une des revendications 1 à 10, caractérisé en ce que la coiffe du rotor est munie d'un couvercle cylindrique (41), qui s'étend axialement jusqu'au-delà du boulon d'amenée d'excitation (13), en ce qu'à l'extrémité libre du couvercle cylindrique (41) est prévu un bloc métallique (44) servant d'organe de contact, avec une face de contact qui est séparée de l'extrémité radialement extérieure du boulon d'amenée d'excitation (13) par un intervalle (45).
